# EUROPEAN PATENT APPLICATION

(11) **EP 4 574 406 A1**
(43) Date of publication of application: **25.06.2025**
(21) Application number: 23307276.8
(22) Date of filing: 20.12.2023
(51) Int. Cl.: B29D 11/00, B29C 64/112, B29C 64/194, B33Y 10/00, B33Y 30/00, B29L 11/00

(54) **METHOD FOR ADDITIVELY MANUFACTURING AN OPHTHALMIC DEVICE AND MANUFACTURING SYSTEM CONFIGURED TO CARRY OUT SUCH A METHOD**

(71) Applicant: Essilor International, 94220 Charenton-Le-Pont (FR)
(72) Inventor: LECOMPERE, Maxime, 78120 RAMBOUILLET (FR); LEITE, Pierre, 91650 BREUILLET (FR); BEN CHEIKH, Ilhem, 91230 MONTGERON (FR); CASTRO MARTINEZ, Luis Ricardo, 94100 SAINT MAUR DES FOSSES (FR); HUPREL, Laurent, 94140 ALFORTVILLE (FR); HERFORT, David, 06000 NICE (FR)
(74) Representative: Santarelli

(57) **Abstract**

The disclosure provides a method for additively manufacturing an ophthalmic device delimited by an external surface, comprising inkjet printing (102) at least one first core layer having at least one first predetermined thickness, inkjet printing (103) at least one second core layer at least partially onto the at least one first core layer and having at least one second predetermined thickness equal or different to the first predetermined thickness, inkjet printing (104) at least one edge layer onto the at least one first core layer and adjacent to the at least one second core layer, the at least one edge layer defining at least partially the external surface of the ophthalmic device and having at least one third predetermined thickness lower than or equal to the at least one second predetermined thickness.

## Description

### FIELD OF THE DISCLOSURE

The disclosure relates to a method for additively manufacturing an ophthalmic device and a manufacturing system configured to carry out such a method.

The disclosure also relates to a command and control unit including system elements configured to run a computer program in order to implement at least some steps of the additive manufacturing method, and to a manufacturing system comprising such a command and control unit and configured for carrying out such a method.

The disclosure also relates to a computer program including instructions configured to implement the additive manufacturing of such a method, when said computer program is run by a computer, and to a client-server communication interface for transferring to a remote computer at least manufacturing data which are determined by a computer program that implements at least some parts of such a method, when said computer program is run in a command and control unit, the remote computer implementing the other parts of such method.

### BACKGROUND ART

It is known to use an additive manufacturing technology to manufacture an ophthalmic device, such as spectacle lenses.

Known methods for additively manufacturing of ophthalmic lenses, such as stereolithography and its variants, comprise curing steps and layering steps which are performed successively in a manufacturing system which comprises a curing device, a layering device and a building platform located in relation to a vat filled with a predetermined material.

For instance, each ophthalmic lens is built layer by layer on the building platform which is movable relative to the vat including a volume of the predetermined material. The building platform is located in a predetermined position, the curing device including an irradiation source performs the curing step of a first layer of material, the layering device performs the layering step at least thanks to a displacement of the building platform so that a novel layer of material having a predetermined thickness can be cured, etc.

In other words, in such known methods, a curing step is performed on a layer which is for instance liquid for the plurality of ophthalmic lenses to be manufactured on the building platform. The liquid layer is thus hardened and next a layering step is performed for forming a new liquid layer on the previous hardened layer of the plurality of ophthalmic lenses to be manufactured.

Another method of additive manufacturing may comprise successively depositing droplets of liquid material and curing them in order to form layers of material. This method, usually called 3D-printing, or inkjet printing, generally controls the shape of the layers by controlling the position and volume of the deposited droplets whereas the curing step is usually global. Other additive manufacturing method may also be used.

In the above methods, a plurality of layers are formed and some features called stair steps can be formed at free ends of the layers, close to an outline of the ophthalmic device.

There is thus a need to provide a method for additively manufacturing an ophthalmic device, by inkjet-printing and with limited such stair steps.

### SUMMARY OF THE DISCLOSURE

The disclosure is directed to a method for additively manufacturing an ophthalmic device, for instance by inkjet-printing, which is simple and convenient to carry out.

The disclosure accordingly provides a method for additively manufacturing an ophthalmic device delimited by an external surface, comprising steps of: inkjet printing at least one first core layer having at least one first predetermined thickness, inkjet printing at least one second core layer at least partially onto the at least one first core layer and having at least one second predetermined thickness equal or different to the first predetermined thickness, inkjet printing at least one edge layer onto the at least one first core layer and adjacent to the at least one second core layer, the at least one edge layer defining at least partially the external surface of the ophthalmic device and having at least one third predetermined thickness lower than or equal to the at least one second predetermined thickness.

Thanks to the method according to the disclosure, it is possible to control accurately the inkjet printing at a peripheral junction between two or more successive layers, thus allowing to smooth the external surface of the ophthalmic device thanks to the dedicated at least one edge layer of a thickness lower than or equal to the thickness of the layer around which the at least one edge layer is deposited and optionally the layer onto which the at least one edge layer is also deposited.

In other words, the method according to the disclosure may allow to provide, thanks to the technology of 3D-inkjet printing, an ophthalmic device having an external surface as closest as possible to a final external surface, with no stair step or with reduced stair steps at the external surface of the ophthalmic device.

Advantageous and convenient features of the manufacturing method are described below.

The method may comprise the step of curing at least partially the at least one first core layer and/or the at least one second core layer before inkjet printing the at least one edge layer.

The method may comprise the steps of inkjet printing at least one third core layer at least partially onto the at least one second core layer and having at least one fourth predetermined thickness equal or different to at least one of the first predetermined thickness, second predetermined thickness and third predetermined thickness, and inkjet printing the at least one edge layer at least partially simultaneously with, or at least partially successively to inkjet printing the at least one third core layer.

In other words, the inkjet printing of the at least one edge layer around the at least one second core layer may be performed at least partially successively to the inkjet printing thereof.

The at least one edge layer may comprise several sub-edge layers of similar or different thicknesses.

The sub-edge layers may be at least partially juxtaposed and/or at least partially superimposed.

The sub-edge layers may be inkjet printed at least partially simultaneously and/or at least partially successively one to each other.

The at least one edge layer may have a closed loop shape around the at least one second core layer.

For instance, the at least one edge layer may have a ring shape.

For instance, the at least one edge layer may have a shape corresponding to a final shape of the ophthalmic device, including a shape of a spectacle frame.

The step of inkjet printing the at least one first core layer and the at least one second core layer may be performed with core print properties while inkjet printing the at least one edge layer is performed with edge print properties at least partially distinct to the core print properties.

The step of inkjet printing the at least one third core layer may also be performed with core print properties at least partially distinct to the edge print properties.

The core print properties can be fixed or variable during inkjet printing the at least one first, second or third core layers.

The edge print properties can be fixed or variable during inkjet printing the at least one edge layer.

The core print properties, respectively the edge print properties, may comprise a core ink material and/or a core drop density and/or a core drop volume and/or a core drop viscosity and/or a core drop speed ejection, and respectively an edge ink material and/or an edge drop density and/or an edge drop volume and/or an edge drop viscosity and/or an edge drop speed ejection.

The step of inkjet printing the at least one third core layer may also comprise a core ink material and/or a core drop density and/or a core drop volume and/or a core drop viscosity and/or a core drop speed ejection.

The step of inkjet printing the at least one first core layer and the at least one second core layer may be performed thanks to a core print head while the step of inkjet printing the at least one edge layer may be performed thanks to an edge print head distinct to the core print head.

The step of inkjet printing the at least one third core layer may be also performed thanks to a core print head.

The method may comprise a step of determining a manufacturing file including geometrical characteristics of a sliced ophthalmic device which are representative of at least the first core layer, the second core layer and the at least one edge layer forming the external surface of the ophthalmic device at a peripheral junction between the first core layer and second core layer.

The manufacturing file may comprise parameters including a plurality of images each representative of a voxel distribution, or of a droplets distribution, used for activating and deactivating nozzles of the print head(s).

The images can be determined thanks to at least one mathematical function, such as linear, power, polynomial, exponential, logarithmic, sinusoidal, etc., which can be used alone of in combination, and which allows for instance to define a "shape" of a staircase which is to be filled.

The disclosure also provides, according to a second aspect, a command and control unit including system elements configured to run a computer program in order to additively manufacture an ophthalmic device delimited by an external surface, by implementing the steps of: inkjet printing at least one first core layer having at least one first predetermined thickness, inkjet printing at least one second core layer at least partially onto the at least one first core layer and having at least one second predetermined thickness equal or different to the first predetermined thickness, inkjet printing at least one edge layer onto the at least one first core layer and adjacent to the at least one second core layer, the at least one edge layer defining at least partially the external surface of the ophthalmic device and having at least one third predetermined thickness lower than or equal to the at least one second predetermined thickness.

The disclosure further provides, according to a third aspect, a manufacturing system comprising an inkjet printer comprising at least one inkjet print head having a plurality of nozzles and a command and control unit, the system being configured for additively manufacturing an ophthalmic device delimited by an external surface, by inkjet printing at least one first core layer having at least one first predetermined thickness, inkjet printing at least one second core layer at least partially onto the at least one first core layer and having at least one second predetermined thickness equal or different to the first predetermined thickness, inkjet printing at least one edge layer onto the at least one first core layer and adjacent to the at least one second core layer, the at least one edge layer defining at least partially the external surface of the ophthalmic device and having at least one third predetermined thickness lower than or equal to the at least one second predetermined thickness.

The disclosure also provides, according to a fourth aspect, a computer program including instructions configured to additively manufacture an ophthalmic device delimited by an external surface, by implementing the steps of: inkjet printing at least one first core layer having at least one first predetermined thickness, inkjet printing at least one second core layer at least partially onto the at least one first core layer and having at least one second predetermined thickness equal or different to the first predetermined thickness, inkjet printing at least one edge layer onto the at least one first core layer and adjacent to the at least one second core layer, the at least one edge layer defining at least partially the external surface of the ophthalmic device and having at least one third predetermined thickness lower than or equal to the at least one second predetermined thickness, when said computer program is run by a computer.

The disclosure further provides, according to a fifth aspect, a client-server communication interface for transferring to a remote computer at least manufacturing data for additively manufacturing an ophthalmic device delimited by an external surface, such as a manufacturing file including geometrical characteristics of a sliced ophthalmic device which are representative of at least one first core layer, at least one second core layer and at least one edge layer forming the external surface of an ophthalmic device at a peripheral junction between the at least one first core layer and at least one second core layer, which are determined by a computer program, when said computer program is run in a command and control unit, the remote computer being configured to implement inkjet printing at least one first core layer having at least one first predetermined thickness, inkjet printing at least one second core layer at least partially onto the at least one first core layer and having at least one second predetermined thickness equal or different to the first predetermined thickness, inkjet printing at least one edge layer onto the at least one first core layer and adjacent to the at least one second core layer, the at least one edge layer defining at least partially the external surface of the ophthalmic device and having at least one third predetermined thickness lower than or equal to the at least one second predetermined thickness.

### BRIEF DESCRIPTION OF THE DRAWINGS

The description of the disclosure now continues with a detailed description of embodiments given hereinafter by way of non-limiting example and with reference to the appended drawings.
Figure 1 is a schematic view of a manufacturing system configured to carry out a method for additively manufacturing ophthalmic devices.
Figure 2 diagrammatically shows a client-server communication interface comprising system parts configured for transferring at least one configuration parameter determined by the method according to the disclosure to a remote data processing system.
Figure 3 is a block diagram showing steps of the method for additively manufacturing an ophthalmic device according to the disclosure.
Figure 4 is a schematic view showing the method carried out according to a first embodiment.
Figure 5 shows images having different voxels distributions.
Figure 6 is a schematic view showing the method carried out according to a second embodiment.
Figures 7 to 9 shows different images having different voxels distribution which can be used to carry out the method illustrated in Figure 4.
Figure 10 shows detail of images based on different drop density and drop volume.

### DETAILED DESCRIPTION OF EXAMPLE EMBODIMENTS

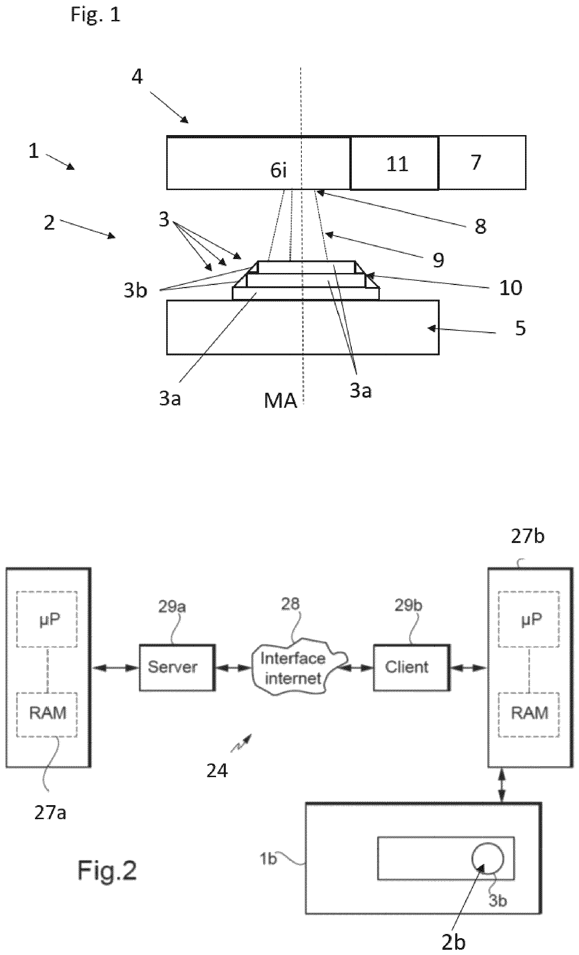

Figure 1 illustrates schematically a manufacturing system 1 configured to carry out a method for additively manufacturing ophthalmic devices 2 each delimited by a respective external surface 10.

In the illustrated embodiment, the manufacturing system 1 is an additive system configured for manufacturing the ophthalmic devices 2 layer by layer, each layer 3 being formed by a volume of the predetermined material 11 at least partially polymerized and hardened.

In this respect, the manufacturing system 1 comprises an additive unit also called additive manufacturing module, and here formed by an inkjet printer 4 which is configured for projecting volumes of at least one predetermined material in the shape of droplets.

The at least one predetermined material is suitable for manufacturing ophthalmic devices 2, such as a liquid resin for making eyeglasses.

The inkjet printer 4 comprises one or a plurality of inkjet print heads 6i having each a plurality of nozzles 8 from which the predetermined material is projected in jets of droplets 9.

A jet of droplets includes droplets which can be considered as being a volume of at least one material devoid of tail or satellite.

Each print head 6i has a predetermined number of nozzle(s) 8 and a predetermined arrangement thereof. The nozzles 8 can be activated or deactivated.

The inkjet printer 4 further comprises at least one curing device 11 including for instance an irradiation source configured for performing curing steps.

In other words, the curing device 11 is able to cure the droplets of material previously deposited by the nozzles 8.

The inkjet printer 4 may further comprise a command and control unit 7 including system elements configured to run a computer program including instructions configured to implement at least some steps of the additive manufacturing method according to the disclosure for manufacturing the ophthalmic device 2.

The command and control unit 7 may be configured to command and control the print head(s) 6i and in particular, a print head resolution corresponding to a radial resolution of the print head(s) 6i which is defined at least as a function of the number and the arrangement of the nozzles 8.

The command and control unit 7 may be configured to command and control activation and/or deactivation of each nozzle 8 and also each nozzle firing frequency if any.

The nozzle firing frequency can be variable or fixed.

The nozzle firing frequency may depend at least on geometrical characteristics of the ophthalmic device 2 to be manufactured and/or on the location, including for instance tilting and radial shifting relative to a manufacturing axis MA, of the print head(s).

The inkjet printer 4 is here located on an upper side of a support member 5 and is configured to build core layers 3a and edge layers 3b at peripheral junctions between adjacent core layers, thus forming the layers 3 on the support member 5.

Depending on the external surface 10 to be obtained for the ophthalmic device 2, the edge layers 3b can be able to form a major part of this external surface 10.

The command and control unit 7 may be configured to locate the print head(s) 6i at a distance value selected among a plurality of distance values from the support member 5.

The distance value is comprised between a minimum height according to which the predetermined material is able to forms droplets and a maximum height according to which the droplets predetermined material are deposited accurately on the support member 5.

The support member 5 can be able to rotate around a rotation axis corresponding to the manufacturing axis MA and the print head(s) 6i and the support member 5 can be able to be inclined one relative to each other and/or the print head(s) 6i can be able to be inclined relative to the manufacturing axis MA.

In this respect, the command and control unit 7 may also be configured to command and control a tilt angle of the print head(s) 6i and the support member one 5 one relative to each other, and a rotation speed of the support member 5 around the manufacturing axis MA.

In addition, the command and control unit 7 may be configured to command and control a print resolution of the print head(s) 6i, which comprises a process resolution corresponding to an angular resolution which is defined at least as a function of nozzles firing frequency, and the print head resolution as defined above.

In particular, the command and control unit 7 may be configured to provide to the print head(s) 6i a manufacturing file or parameters from this file including geometrical characteristics representative of the core layers 3a and edge layers 3b of the ophthalmic device 2, thus defining a so-called sliced ophthalmic device.

The parameters of the manufacturing file may comprise a plurality of images each representative of a voxel distribution, or of a droplets distribution.

In other words, the images determine the activated and deactivated nozzles 8 of the print head(s) 6i.

The images can be determined thanks to at least one mathematical function defining the "shape" of the staircase which is to be filled.

Different kinds of mathematical functions can be used alone or in combination, such as linear, power, polynomial, exponential, logarithmic, sinusoidal, etc.

Depending on the external surface to be obtained, and more generally on geometrical characteristics of the ophthalmic device to be manufactured, including curvatures, several images obtained on the basis on several mathematical functions can be used.

Each core layer 3a and/or each edge layer 3b can thus be defined by one or a plurality of images, depending on the geometrical characteristics of the layer as such and/or on core print properties and/or on edge print properties and/or on the print resolution and/or on the process resolution defined above.

The core print properties may comprise a core ink material and/or a core drop density and/or a core drop volume and/or a core drop viscosity and/or a core drop speed ejection; and the edge print properties may comprise an edge ink material and/or an edge drop density and/or an edge drop volume and/or an edge drop viscosity and/or an edge drop speed ejection.

Figure 2 shows a client-server communication interface 24 comprising for instance a so-called supplier side 29a and another, so-called client side 29b, and these two sides communicating via an internet interface 28.

The supplier side comprises a server 29a linked to a data processing system or a command and control unit 27a of the same type as the command and control unit 7 disclosed in Figure 1, this server 29a being configured to communicate with the internet interface 28.

The client side 29b is configured to communicate with the internet interface 28, and is linked to a data processing system or a command and control unit 27b of the same type as that of the supplier side.

Furthermore, the command and control unit 27b on the client-side is linked to a manufacturing system 1b of the same type as that in Figure 1 for manufacturing an ophthalmic device 2b, using a layer 3b by layer 3b processing thanks to an inkjet printer as described above.

For instance, the command and control unit 27b on the client-side is configured for receiving by a user some parameters about the ophthalmic device to be manufactured, about the inkjet printer and about the manufacturing method intended to be implemented for additively manufacturing the ophthalmic device 2b.

The command and control unit 27b on the client-side, using the internet 28 and server 29a interface, sends the data received to the command and control unit 27a on the supplier-side for the determination of a manufacturing file and operational parameters as described above.

The command and control unit 27a on the supplier-side executes the computer program that it contains in order to implement some steps of the method for additively manufacturing the ophthalmic device.

Using the server 29a and the internet interface 28, the command and control unit 27a on the supplier-side sends the manufacturing file and operational parameters to the command and control unit 27b on the client side.

The command and control unit 27b on the client side is here configured to execute software for implementing the other steps of the method for additively manufacturing the ophthalmic device, that is to say layering and curing the layers of the ophthalmic device to be manufactured.

In variant, the manufacturing system can be located on the supplier side so that the command and control unit on the supplier side is configured both to determine the manufacturing file and operational parameters and to additively manufacture the ophthalmic device.

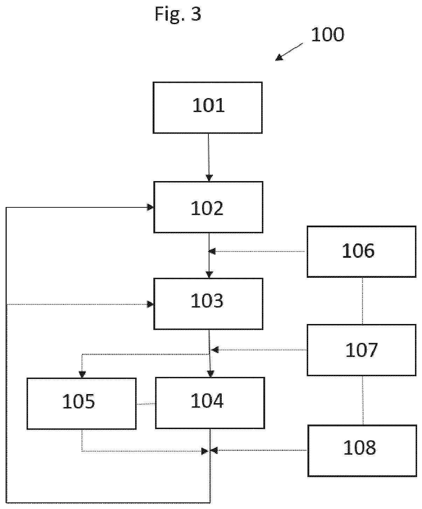

Figure 3 is a block diagram showing the main steps of the method 100 for additively manufacturing an ophthalmic device 2 delimited by the external surface 10, the method 100 being carried out thanks to the manufacturing system 1 as described above.

The method 100 comprises the following steps:
- determining and/or providing 101 a manufacturing file including geometrical characteristics of the so-called sliced ophthalmic device;
- layering by inkjet printing 102 at least one first core layer;
- layering by inkjet printing 103 at least one second core layer at least partially onto the at least one first core layer;
- inkjet printing 104 at least one edge layer onto the at least one first core layer and adjacent to the at least one second core layer.

The method 100 may further comprise the step of layering by inkjet printing 105 at least one third core layer at least partially onto the at least one second core layer.

To be noted that the steps 104 and 105 of inkjet printing the at least one edge layer and the at least one third core layer can be performed at least partially simultaneously or at least partially successively.

The at least one first core layer may have at least one first predetermined thickness, the at least one second core layer may have at least one second predetermined thickness equal or different to the first predetermined thickness, the at least one edge layer defines at least partially the external surface 10 of the ophthalmic device 2 and may have at least one third predetermined thickness lower than or equal to the at least one second predetermined thickness; and the at least one third core layer may have at least one fourth predetermined thickness equal or different to at least one of the first predetermined thickness, second predetermined thickness and third predetermined thickness.

The method 100 may further comprise at least one of the following steps:
- at least partially curing 106 the at least one first core layer before inkjet printing 103 the at least one second core layer, and at least before inkjet printing 104 the at least one edge layer; and/or
- at least partially curing 107 the at least one second core layer before inkjet printing 104 the at least one edge layer; and/or
- at least partially curing 108 the at least one edge layer and/or the at least one third core layer.

The method 100 can be iterative. The steps 104 and/or 105 of inkjet printing the at least one edge layer and/or the at least one third core layer can be followed by the steps 102 and/or 103 of layering by inkjet printing further first and second core layers and/or the curing steps 106, 107 and 108.

The step 104 of inkjet printing the at least one edge layer may comprise sub-steps of inkjet printing, at least partially simultaneously and/or at least partially successively, several sub-edge layers of similar or different thicknesses and arranged to be at least partially juxtaposed and/or at least partially superimposed, so that to obtain the at least one edge layer formed by the plurality of sub-edge layers.

In addition, the steps 102, 103 and 105 of inkjet printing the at least one first core layer, the at least one second core layer and the at least one third core layer may be performed with core print properties, similar or different one to each other, while the step 104 of inkjet printing the at least one edge layer may be performed with edge print properties at least partially distinct to the core print properties.

The core print properties can be fixed or variable during inkjet printing the at least one first, second or third core layers; and the edge print properties can be fixed or variable during inkjet printing the at least one edge layer.

For instance, the steps 102 and 103 and optionally 105 of inkjet printing the at least one first core layer, the at least one second core layer and also optionally the third core layer, may be performed thanks to at least one core print head amongst the plurality of inkjet print heads 6i, while the steps 104 of inkjet printing the at least one edge layer may be performed thanks to at least one edge print head amongst the plurality of inkjet print heads 6i, distinct to the core print head(s).

When an edge layer and a third core layer are inkjet printed simultaneously, that can be performed for instance thanks to different inkjet print heads 6i or by a single "hybrid" inkjet print head 6i configured to deliver both core print properties and edge print properties.

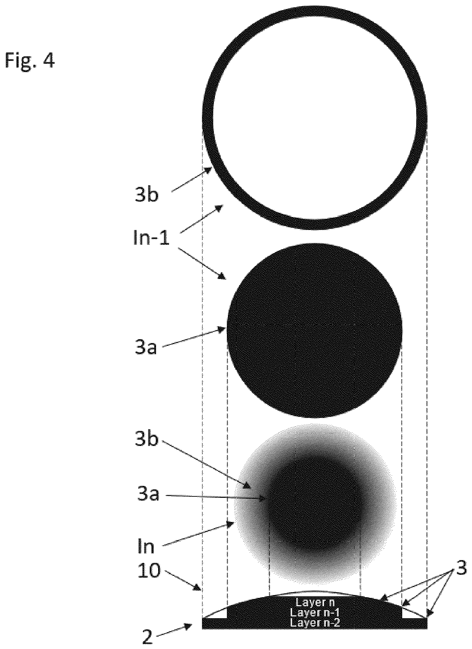

Figure 4 shows a first example of a distribution of voxels according to the above described method, in order to inkjet print several layers 3 so as to obtain the ophthalmic device 2 having the external surface 10 without staircase.

In particular, the layer "n-2" is here inkjet printed only as a core layer.

Then, the core layer 3a of the layer "n-1" is inkjet printed partially onto the layer "n-2.

Then, the layers "n-2" and "n-1" are cured.

Then, the layer "n" is inkjet printed simultaneously as both a core layer 3a and a edge layer 3b around the core layer 3a, onto the layer "n-1".

Then, the layer "n" is cured.

Then, the edge layer 3b of the layer "n-1" is inkjet printed partially on the layer "n-2" and at least around the core layer 3a of the layer "n-1 ".

The edge layer 3b of the layer "n-1" has here a close ring shape.

In Figure 4, the layer "n" is obtained for instance thanks to the single image In including two different voxels distributions on the core and on the edge, also called hybrid distribution, while the layer "n-1" is obtained for instance thanks to several images In-1, one being dedicated to the core and the other to the edge.

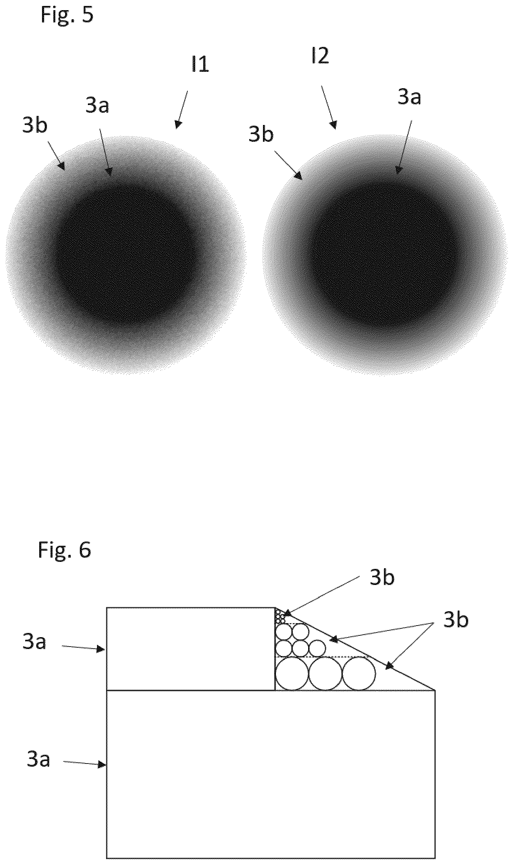

Figure 5 shows two images having different voxels distribution, including image 11 representing a core layer 3a and an edge layer 3b which is randomly distributed; and image I2 representing a core layer 3a and an edge layer 3b which is orderly distributed.

Figure 6 shows a second example of a distribution of voxels according to the above described method, in which the edge layer 3b is orderly distributed.

In particular, Figure 6 focuses on the sub-edge layers 3b of both similar and different thicknesses deposited onto a first core layer and around a second core layer 3a.

The sub-edge layers 3b divided in three zones and are here at least partially juxtaposed and at least partially superimposed depending on the zone.

In this example, in a first zone, biggest droplets form a sub-edge layer directly onto the first core layer; in a second zone, smallest droplets form sub-edge layers opposite to the first core layer; and in a third zone, middle droplets form sub-edge layers located between the first and second zones.

The sub-edge layers 3b shown in Figure 6 can be inkjet printed at least partially simultaneously and/or at least partially successively one to each other and/or thanks to a single or a plurality of print heads 6i.

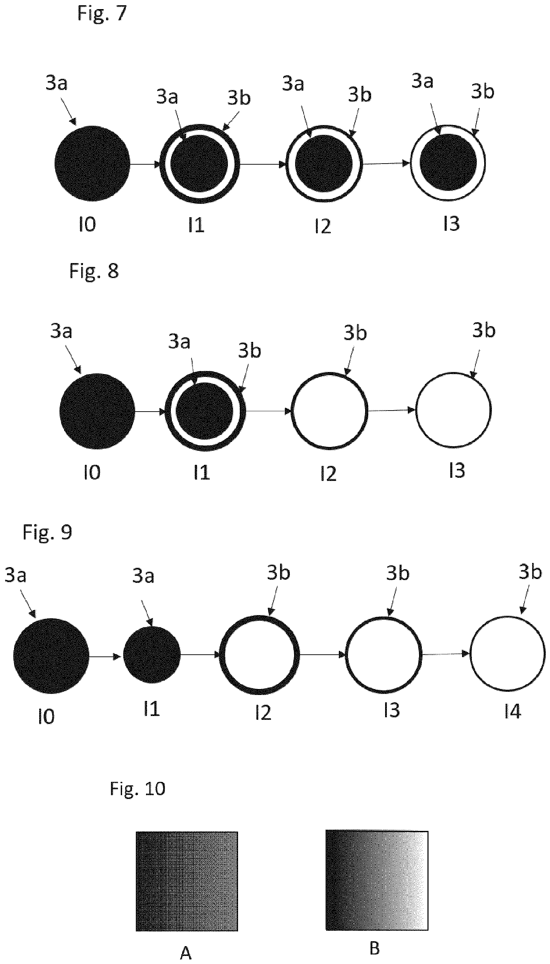

Figures 7 to 9 show different images having different voxels distribution which can be used to carry out the method according to the disclosure and in particular the core layers 3a and sub-edge layers 3b as shown in Figure 6.

In Figure 7, the first core layer 3a is inkjet printed thanks to image I0.

Then, the second core layer 3a and a first sub-edge layer of the edge layer 3b, including the biggest droplets, are simultaneously inkjet printed thanks to image I1.

Then, the second core layer 3a and a second sub-edge layer of the edge layer 3b, including middle droplets, are simultaneously inkjet printed thanks to image I2.

Then, the second core layer 3a and a second sub-edge layer of the edge layer 3b, including the smallest droplets, are simultaneously inkjet printed thanks to image I3.

In variant, in Figure 8, the first core layer 3a is inkjet printed thanks to image I0; then, the second core layer 3a and the first sub-edge layer of the edge layer 3b having the biggest droplets are simultaneously inkjet printed thanks to image 11; then the second sub-edge layer of the edge layer 3b having middle droplets is inkjet printed thanks to image I2; then the second sub-edge layer of the edge layer 3b having the smallest droplets is inkjet printed thanks to image I3.

In another variant, in Figure 9, the first core layer 3a is inkjet printed thanks to image I0; then, the second core layer 3a is inkjet printed thanks to image 11; then the first sub-edge layer of the edge layer 3b having the biggest droplets is inkjet printed thanks to image I2; then the second sub-edge layer of the edge layer 3b having middle droplets is inkjet printed thanks to image I3; then the second sub-edge layer of the edge layer 3b having the smallest droplets is inkjet printed thanks to image I4.

In these examples, curing steps can be carried out between steps of inkjet printing, as described above.

Figure 10 shows detail of some of images illustrated in Figures 7 to 9, based on different drop density A and drop volume B for instance for obtaining the sub-edges layer of the edge layer 3b.

Thanks to the method according to the disclosure, it is possible to control accurately the inkjet printing at a peripheral junction between two or more successive layers, thus allowing to smooth the external surface of the ophthalmic device thanks to the dedicated at least one edge layer of a thickness lower than or equal to the thickness of the layer around which the at least one edge layer is deposited and optionally the layer onto which the at least one edge layer is also deposited.

In other words, the method according to the disclosure may allow to provide, thanks to the technology of 3D-inkjet printing, an ophthalmic device having an external surface as closest as possible to a final external surface, with no stair step or with reduced stair steps at the external surface of the ophthalmic device.

In addition, the method according to the disclosure allows to slice, or divide, layers which should usually be thicker, in a plurality of sublayers being thinness so as to discretize a pitch between these layers by depositing an accurate little amount of material at least on the edges and in order to obtain a curvature as closest as possible to the theoretical geometry, without any printing defaults such as staircases, which are indeed "smoothed" and/or "self-leveled".

It is to be noted that the external surface to be obtained, and more generally the geometrical characteristics of the ophthalmic device to be manufactured, can be adjusted, for instance slightly enlarged or extended, depending on the staircases to be "smoothed" and/or to be "self-leveled".

Furthermore, the edge layers described above can be determined taking into the "self-level" properties of the material itself, so that there is no need, depending at least on geometrical characteristics and edge ink properties, to fill completely the volume corresponding to the staircase around the respective core layer.

In variants:
- the support member can be a starting optical member and the inkjet printer is configured to build over a complementary optical member, formed by the layers, on the starting optical member;
- the support member can be a part of a molding device and the layers can be built over the molding device in order to form a complementary optical member which is then removed from the starting optical member and assembled with a separate standard blank;
- the support member can be a part of a molding device and the layers can be built over the molding device in order to form a complementary optical member, and then a standard blank is molded, casted or injected directly in the molding device and onto the complementary optical member; and/or
- the support member can be a part of a molding device and the layers can be built over the molding device in order to form a complementary optical member in a shape which is adapted to mounted directly in a pair of eyeglasses' frame.

It should be noted more generally that the disclosure is not limited to the examples described and represented.

## Claims

1. Method for additively manufacturing an ophthalmic device (2) delimited by an external surface (10), comprising inkjet printing (102) at least one first core layer (3a) having at least one first predetermined thickness, inkjet printing (103) at least one second core layer (3a) at least partially onto the at least one first core layer (3a) and having at least one second predetermined thickness equal or different to the first predetermined thickness, inkjet printing (104) at least one edge layer (3b) onto the at least one first core layer (3a) and adjacent to the at least one second core layer (3a), the at least one edge layer defining at least partially the external surface (10) of the ophthalmic device (2) and having at least one third predetermined thickness lower than or equal to the at least one second predetermined thickness.

2. Method according to claim 1, comprising curing (106, 107) at least partially the at least one first core layer (3a) and/or the at least one second core layer (3a) before inkjet printing (104) the at least one edge layer (3b).

3. Method according to one of claims 1 and 2, comprising inkjet printing (105) at least one third core layer (3a) at least partially onto the at least one second core layer (3a) and having at least one fourth predetermined thickness equal or different to at least one of the first predetermined thickness, second predetermined thickness and third predetermined thickness, and inkjet printing (106) the at least one edge layer at least partially simultaneously with, or at least partially successively to inkjet printing (105) the at least one third core layer.

4. Method according to any one of claims 1 to 3, wherein the at least one edge layer (3b) comprises several sub-edge layers of similar or different thicknesses, the sub-edge layers being at least partially juxtaposed and/or at least partially superimposed.

5. Method according to claim 4, wherein the sub-edge layers is inkjet printed at least partially simultaneously and/or at least partially successively one to each other.

6. Method according to any one of claims 1 to 5, wherein the at least one edge layer (3b) has a closed loop shape around the at least one second core layer.

7. Method according to any one of claims 1 to 6, wherein inkjet printing (102, 103) the at least one first core layer (3a) and the at least one second core layer (3a) is performed with core print properties which are fixed or variable during inkjet printing the at least one first core layer and the at least one second core layer, while inkjet printing (104) the at least one edge layer is performed with edge print properties at least partially distinct to the core print properties and which are fixed or variable during inkjet printing the at least one edge layer.

8. Method according to claim 7, wherein the core print properties, respectively the edge print properties, comprise a core ink material and/or a core drop density and/or a core drop volume and/or a core drop viscosity and/or a core drop speed ejection, and respectively an edge ink material and/or an edge drop density and/or an edge drop volume and/or an edge drop viscosity and/or an edge drop speed ejection.

9. Method according to any one of claims 1 to 8, wherein inkjet printing (102, 103) the at least one first core layer (3a) and the at least one second core layer (3a) is performed thanks to a core print head while inkjet printing the at least one edge layer (3b) is performed thanks to an edge print head distinct to the core print head.

10. Method according to any one of claims 1 to 9, comprising determining (101) a manufacturing file including geometrical characteristics of a sliced ophthalmic device which are representative of at least the first core layer (3a), the second core layer (3a) and the at least one edge layer (3b) forming the external surface (10) of the ophthalmic device (2) at a peripheral junction between the first core layer and second core layer.

11. Method according to claim 10, wherein the manufacturing file comprises parameters defined by a plurality of images (I0, I1, I2, I3, I4) each representative of a voxel distribution, or of a droplets distribution, used for activating and deactivating nozzles (8) of print head(s) (6i) for carrying out inkjet printing, the images being determined thanks to at least one mathematical function, such as linear, power, polynomial, exponential, logarithmic, sinusoidal, used alone of in combination.

12. A command and control unit including system elements configured to run a computer program in order to additively manufacture an ophthalmic device (2) delimited by an external surface (10), by implementing: inkjet printing (102) at least one first core layer (3a) having at least one first predetermined thickness, inkjet printing (103) at least one second core layer (3a) at least partially onto the at least one first core layer and having at least one second predetermined thickness equal or different to the first predetermined thickness, inkjet printing (104) at least one edge layer (3b) onto the at least one first core layer and adjacent to the at least one second core layer, the at least one edge layer defining at least partially the external surface of the ophthalmic device and having at least one third predetermined thickness lower than or equal to the at least one second predetermined thickness.

13. A manufacturing system comprising an inkjet printer (4) comprising at least one inkjet print head (6i) having a plurality of nozzles (8) and a command and control unit (7), the system being configured for additively manufacturing an ophthalmic device (2) delimited by an external surface (10), by inkjet printing (102) at least one first core layer (3a) having at least one first predetermined thickness, inkjet printing (103) at least one second core layer (3a) at least partially onto the at least one first core layer and having at least one second predetermined thickness equal or different to the first predetermined thickness, inkjet printing (104) at least one edge layer (3b) onto the at least one first core layer and adjacent to the at least one second core layer, the at least one edge layer defining at least partially the external surface of the ophthalmic device and having at least one third predetermined thickness lower than or equal to the at least one second predetermined thickness.

14. A computer program including instructions configured to additively manufacture an ophthalmic device (2) delimited by an external surface (10), by implementing: inkjet printing (102) at least one first core layer (3a) having at least one first predetermined thickness, inkjet printing (103) at least one second core layer (3a) at least partially onto the at least one first core layer and having at least one second predetermined thickness equal or different to the first predetermined thickness, inkjet printing (104) at least one edge layer (3b) onto the at least one first core layer and adjacent to the at least one second core layer, the at least one edge layer defining at least partially the external surface of the ophthalmic device and having at least one third predetermined thickness lower than or equal to the at least one second predetermined thickness, when said computer program is run by a computer.

15. A client-server communication interface for transferring to a remote computer at least manufacturing data for additively manufacturing an ophthalmic device (2) delimited by an external surface (10), such as a manufacturing file including geometrical characteristics of a sliced ophthalmic device which are representative of at least one first core layer (3a), at least one second core layer (3a) and at least one edge layer (3b) forming the external surface of an ophthalmic device at a peripheral junction between the at least one first core layer and at least one second core layer, which are determined by a computer program, when said computer program is run in a command and control unit, the remote computer being configured to implement inkjet printing (102) at least one first core layer having at least one first predetermined thickness, inkjet printing (103) at least one second core layer at least partially onto the at least one first core layer and having at least one second predetermined thickness equal or different to the first predetermined thickness, inkjet printing (104) at least one edge layer onto the at least one first core layer and adjacent to the at least one second core layer, the at least one edge layer defining at least partially the external surface of the ophthalmic device and having at least one third predetermined thickness lower than or equal to the at least one second predetermined thickness.
